# EUROPÄISCHE PATENTSCHRIFT

(11) **EP 1 308 265 B1**
(45) Veröffentlichungstag und Bekanntmachung des Hinweises auf die Patenterteilung: **19.04.2006**
(21) Anmeldenummer: 02024255.8
(22) Anmeldetag: 31.10.2002
(51) Int. Cl.: B29C 70/30, B29C 70/46

(54) **Bauteil in langgestreckter Bauweise aus einem Faser-Kunststoff-Verbund**
Elongated shaped moulded part from fibre reinforced composite material
Pièce moulée allongée de matière composite renforcée par des fibres

(30) Priorität: 02.11.2001 DE 10153875
(43) Veröffentlichungstag der Anmeldung: 07.05.2003
(73) Patentinhaber: BPW Bergische Achsen Kommanditgesellschaft, 51674 Wiehl (DE)
(72) Erfinder: Schürmann, Helmut, 67133 Maxdorf (DE)
(74) Vertreter: Christophersen, Ruth

(56) Entgegenhaltungen:
- EP-A- 0 033 244
- EP-A- 0 082 321
- EP-A- 0 084 101
- EP-A- 0 213 109
- US-A- 5 875 693

## Beschreibung

Die Erfindung betrifft ein Bauteil in langgestreckter Bauweise aus einem Faser-Kunststoff-Verbund.

Bei der Herstellung von Faserverbund-Bauteilen besteht ein wachsendes Interesse an automatisierten Fertigungstechniken. Zunehmend werden Verfahren eingesetzt, bei denen Faservorformlinge mit Harz injiziert werden, und unter Verwendung von Stickautomaten (Tailored Fibre Placement- TFP) beanspruchungsgerechte, kostengünstige Faservorformlinge (so genannte preforms) für endlosfaserverstärkte Verbundbauteile hergestellt werden. Diese preforms sind "tailored" im Sinne von beanspruchungsgerechten Faserorientierungen, lokalen beanspruchungsgerechten Faseranhäufungen und Außenkonturen. Die so hergestellten Vorformlinge können mit herkömmlichen Fertigungsprozessen zu Bauteilen verarbeitet werden. Eine Erläuterung derartiger Verfahren findet sich o. a. in Mattheij, P.; Gliesche, K.; Feltin, D.: Mechanische Eigenschaften von Tailored Fibre Placement (TPF-) Laminaten im Vergleich zu konventionellen Verstärkungsstrukturen. DGM-Tagung "Verbundwerkstoffe und Werkstoffverbunde", Kaiserslautern, 11.1997.

Aus dem Stand der Technik sind faserverstärkte Bauteile bekannt.

In der EP-A-0 084 101 wird ein Verfahren zum Herstellen von Blattfedern aus mehreren miteinander verpressten Laminatschichten aus faserverstärkten Werkstoffen offenbart. Zur Herstellung von Blattfedern werden zumindest teilweise ausgehärtete dünne Platten, wie ein- oder mehrlagige Laminatplatten oder Gewebeplatten verwendet, die durch Verkleben oder Verpressen miteinander verbunden werden.

In EP-A-0 033 244 wird ein weiteres Material zur Herstellung von faserverstärkten Strukturen offenbart, welches ein langgestrecktes Faserverstärkungsmaterial mit darin befindlichen thermoplastischen Harzen enthält.

In EP-A-0 082 321 wird eine Biegefeder aus faserverstärktem Kunststoff, insbesondere in Form eines gekrümmten Federblattes mit von der Mittel zu beiden Enden hin abnehmender Dicke, bei welcher Faserstränge in unidirektionaler Faserorientierung über die Federlänge zwei Deckschichten einer stoffschlüssig zwischengefügten Abstandsschicht bilden, die aus Fasergewebe oder dergleichen besteht, offenbart. Die Abstandsschicht an beiden Federlängsrändern ragt jeweils in Form einer Federanschluß-Lasche aus den Deckschichten heraus und gegenüber deren Fasersträngen sind die Gewebefasern der Abstandschicht in überwiegend kreuzweiser Orientierung angeordnet.

Im US-Patent US-5,875,693 wird ein Handwerkzeug offenbart, das ein langgestrecktes Bauteil aufweist mit im Wesentlichen zueinander parallelen Platten aus einem Faser-Kunststoff-Verbund. Die Verstärkungsfasern verlaufen in Richtung der Haupterstreckung des Bauteils.

Im oben genannten Stand der Technik werden Bauteile beschrieben aus faserverstärktem Kunststoff mit gleichmäßiger Verteilung der Verstärkungsfasern offenbart.

Die EP-A-0 213 109 offenbart, gemäß dem Oberbegriff des Anspruchs 1 ein Bauteil, insbesondere ein Federblatt mit, in Belastungsrichtung gesehen, im wesentlichen übereinander angeordneten Schichten aus faserverstärktem, hartelastischem Kunststoff, wobei die Fasern sich zumindest teilweise in Längsrichtung der Feder erstrecken und die Schichten flächig miteinander verbunden sind. Um die innerhalb der Feder auftretende Beanspruchung zu berücksichtigen, sind in der unbelasteten Feder zumindest zwei mittel- bzw. unmittelbar miteinander verbundene Schichten, und zwar Kunststoff und Fasern, gegeneinander verspannt. Die der Zugseite der Feder bei Betriebsbelastung nähere Schicht ist auf ihrer Zugseite bei Betriebsbelastung auf Druck, und die der Druckseite der Feder bei Betriebsbelastung nähere Schicht auf Ihrer Druckseite bei Betriebsbelastung auf Zug vorgespannt ist.

Der Erfindung liegt die **Aufgabe** zugrunde, Bauteile aus einem Faser-Kunststoff-Verbund in der Weise weiterzuentwickeln, daß bei optimiertem Materialeinsatz eine große Anpassungsfähigkeit der Bauteilgeometrie an den sich im Einsatz des Bauteils einstellenden Kraftfluß erreicht wird.

Zur **Lösung** dieser Aufgabe wird ein Bauteil in langgestreckter Bauweise mit geschichteten, im wesentlichen zueinander parallelen Platten aus einem Faser-Kunststoff-Verbund vorgeschlagen, das dadurch gekennzeichnet ist, daß es eine erhöhte Faserdichte an Orten erhöhter Beanspruchung des Bauteils aufweist und dass jede der Platten (4a, 4b, 4c, 4d, 4e, 4f) schräg zur Haupterstreckung des Bauteils verlaufende Verstärkungsfasern (6) enthält.

Bei jeder dieser Einzelplatten handelt es sich um ein Laminat, bei dem die Fasern, je nach Position der Platte innerhalb des Bauteiles, belastungsgerecht angeordnet sind. Durch die Schichtung der einzelnen Platten und beispielsweise durch eine in den einzelnen Platten unterschiedliche Faserorientierung kann erreicht werden, daß das Bauteil in vertikaler und seitlicher Richtung zur Längserstreckung an die auf das Bauteil wirkende Belastung angepaßt wird. Auf diese Weise ist das Bauteil besonders gut dazu geeignet, auch z. B. eine "schiefe Biegung" aufzunehmen.
Dies insbesondere dann, wenn jede der Platten einen unterschiedlichen Laminataufbau aufweist.

Aus Festigkeitsgründen wird bevorzugt, wenn jede der Platten schräg zur Haupterstreckung des Bauteils verlaufende Verstärkungsfasern enthält.

Gemäß einer Ausgestaltung sind die einzelnen Faserstränge durch Versticken in den belastungsgerechten Richtungen verbunden. Die hierbei anwendbare Sticktechnik ist an und für sich bekannt, vgl. hierzu die eingangs bereits erwähnte Veröffentlichung "mechanische Eigenschaften von Tailored Fibred Placement (TFP-) Laminaten im Vergleich zu konventionellen Verstärkungsstrukturen".

Alternativ zu diesem Verstickungs- bzw. Stickverfahren wird vorgeschlagen, daß einzelne Segmente der Platten aus ausgestanzten Gewebe- oder Gelegeabschnitten, vorzugsweise unidirektionalen Gelegeabschnitte belastungsgerecht drapiert werden. Derartige Gewebe und/oder Gelegeabschnitte sind vorteilhafterweise vorab mit Matrix getränkt, vorzugsweise mit einem thermoplastischen, einem duroplastischen und/oder einem elastomeren Matrixmaterial. Vorteilhafterweise ist die Matrix der einzelnen Platten im Fall der Verwendung von Duroplasten schon ausgehärtet und im Fall der Verwendung einer thermoplastischen Matrix diese schon erstarrt.

Mit einer weiteren Ausgestaltung des erfindungsgemäßen Bauteils wird vorge-schlagen, daß die Faserstränge an Kreuzungsorten miteinander verbunden sind, was z.B. durch das oben bereits genannte Stickverfahren erfolgen kann. Angestrebt wird hierbei, daß sich die Verstärkungsfasern unter Winkeln </= 45° kreuzen, vorzugsweise in den durch Schubspannungen besonders beanspruchten Bereichen des Bauteils.

Vorgeschlagen wird des weiteren, daß das Bauteil einen erhöhten Faservolumenanteil an Orten erhöhter Beanspruchung aufweist. Auf diese Weise können Besonderheiten beim späteren Einsatz des Bauteils und insbesondere den dann wirkenden Zug-, Druck-, Torsions-, Biege- oder sonstigen Verformungskräften Rechnung getragen werden.

Eine weitere bevorzugte Ausgestaltung des erfindungsgemäßen Bauteils ist gekennzeichnet durch zusätzliche, in Richtung der Haupterstreckung verlaufende Verstärkungsfasern entlang der Außenkontur des Bauteils.

Ferner wird vorgeschlagen, daß sich die Orientierung der Verstärkungsfasern innerhalb der jeweiligen Platte quer zur Schichtdicke ändert, um auf diese Weise besonderen späteren Belastungszuständen Rechnung zu tragen. Die Verstärkungsfasern verlaufen dabei in dem durch die Platten vorgegebenen Volumenraum, wobei sich die Orientierung der Verstärkungsfasern in diesem Raum völlig frei ändern kann. Die Orientierung der Verstärkungsfasern kann sich somit sowohl in Längsrichtung, das heißt der Richtung der Haupterstreckung des Bauteils als auch in Querrichtung, das heißt senkrecht zur Richtung der Haupterstreckung des Bauteils, ändern. Es ist ferner vorteilhaft, die Mengenverteilung der Verstärkungsfasern innerhalb der jeweiligen Platte in Längsrichtung und/oder Querrichtung unterschiedlich vorzusehen, um lokal variablen Beanspruchungen Rechnung tragen zu können.

Vorzugsweise ist das Grundmaterial, in welches die Verstärkungsfasern eingelegt sind, ein Thermoplast. Verwendbar sind jedoch auch Duroplaste und Elastomere. Hinsichtlich der Verstärkungsfasern selbst wird der Einsatz von Glasfasern oder Kohlenstoffasern bevorzugt.

Das Verbinden der einzelnen Platten miteinander erfolgt vorzugsweise durch flächiges Verkleben mit einem Epoxid- oder Polyurethankleber. Alternativ ist es auch möglich, die Platten durch thermisches Verschweißen miteinander zu verbinden.

Im Hinblick auf eine möglichst kostengünstige Fertigung des Bauteils wird man in der Regel anstreben, die einzelnen Platten aus identischen Typen von Verstärkungsfasern aufzubauen. Im Hinblick auf eine Adaption an besondere Geometrien oder Belastungszustände kann es jedoch von Vorteil sein, wenn je nach Einsatzfall die einzelnen Platten unterschiedliche Typen von Verstärkungsfasern enthalten. Auch können die Verstärkungsfasern in unterschiedlichen Platten unterschiedlich orientiert sein. Schließlich können die Verstärkungsfasern in unterschiedlichen Platten einen unterschiedlichen Faseraufbau hinsichtlich ihrer Schichtungsreihenfolge aufweisen.

Schließlich ist das Bauteil mit einem Gelenkauge versehen, wobei sich die Achse des Gelenkauges quer zur Schichtungsrichtung der Platten erstreckt. Verstärkungsfasern Können das Gelenkauge um mindestens 180° umschlingen. Hierduch wird eine besonders gute mechanische Einbindung des in der Praxis besonders stark beanspruchten Gelenkauges in das Bauteil erreicht. Eine solche Gestaltung ist z.B. dann von Vorteil, wenn es sich bei dem Bauteil um einen Längslenker eines Fahrzeuges und insbesondere eines Lastkraftwagens oder eines Lkw-Anhängers oder -aufliegers handelt. Das Gelenkauge dient hierbei der Verbindung des Längslenkers mit einer starr an dem Fahrzeugrahmen befestigten Konsole, wohingegen sich am anderen Ende des langgestreckten Bauteils Befestigungsorte einmal für die Fahrzeugachse, und zum anderen für ein Federelement und vorzugsweise einen Luftfederbalg finden.

Einzelheiten der Erfindung werden nachfolgend anhand der zugehörigen Zeichnung näher erläutert. Auf den Zeichnungen zeigen:
- Fig. 1: in perspektivischer Darstellung ein erfindungsgemäßes Bauteil in langgestreckter Bauweise, wobei es sich bei diesem Bauteil um einen Längslenker für die Achse eines Schwerlast-Kraftfahrzeuges handelt;
- Fig. 2: in einer perspektivischen Einzeldarstellung die Möglichkeit, innerhalb der Schichten des Bauteils einzelne ausgestanzte Gewebe- oder Gelegeabschnitte einzusetzen;
- Fig. 3: in perspektivischer Teildarstellung eine weitere Ausführungsform eines erfindungsgemäßen Bauteils und
- Fig. 4: in perspektivischer Teildarstellung eine weitere Ausführungsform eines erfindungsgemäßen Bauteils.

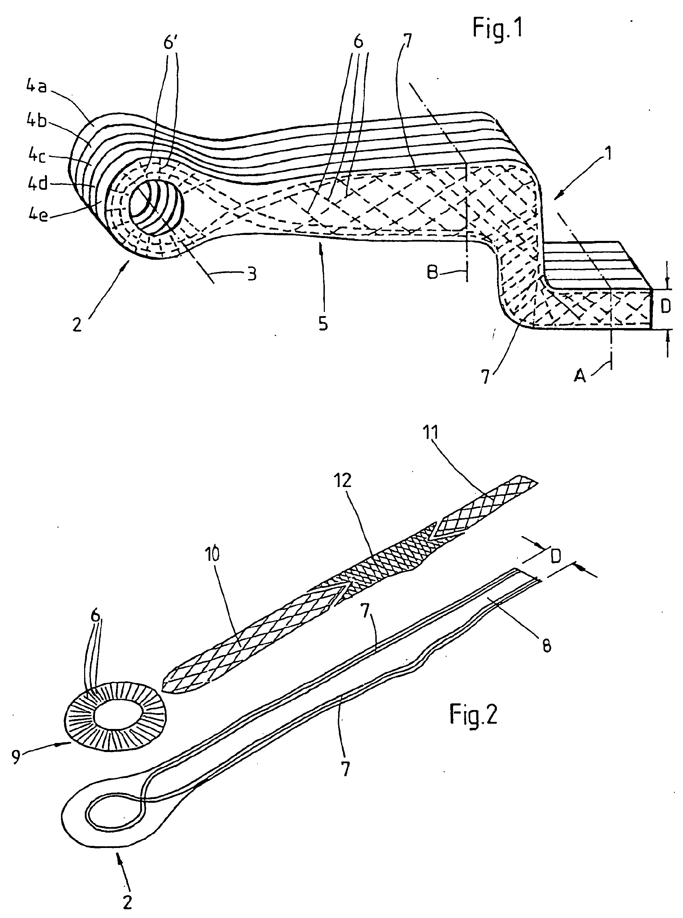

Fig. 1 zeigt ein Bauteil in langgestreckter Bauweise, wobei dieses Bauteil im Bereich 1 mit einer Abkröpfung versehen ist. Am einen Ende ist das Bauteil mit einem erweiterten Gelenkauge 2 versehen, welches eine Bohrung mit der Achse 3 umschließt. Das Bauteil setzt sich aus mehreren parallel zueinander angeordneten Platten 4a, 4b, 4c, 4d, 4e zusammen. Jede der Platten ist für sich betrachtet ein Faser-Kunststoff-Verbund, bestehend aus einem Grundmaterial, in welches Verstärkungsfasern eingelegt sind. Bei dem Grundmaterial handelt es sich vorzugsweise um ein Thermoplast, bei den darin eingelegten Verstärkungsfasern um Glasfasern oder Kohlenstoffasern.

Bei dem in Fig. 1 dargestellten Ausführungsbeispiel sind insgesamt fünf Platten 4a, 4b, 4c, 4d, 4e nach Art einer Schichtung zu einem Bauteil zusammengesetzt. Selbstverständlich kann die Anzahl dieser Schichten auch geringer oder größer sein, je nach Anwendungs- und Einsatzzweck des betreffenden Bauteils.

Das in Fig. 1 dargestellte Bauteil ist ein Längslenker bzw. eine Lenkerfeder, welche der Abstützung einer Fahrzeugachse eines Schwerlast-Fahrzeuges und insbesondere eines Schwerlast-Anhängerfahrzeuges gegenüber dem Fahrzeugrahmen dient. Ein solcher Längslenker ist schwenkbar am Fahrzeugrahmen angelenkt, wozu das dargestellte Gelenkauge 2 mittels eines Bolzens an einer Konsole des Fahrzeugrahmens schwenkbar gelagert ist. Am anderen Ende des Längslenkers, im Bereich der in Fig. 1 bezeichneten Ebene A, stützt sich der Längslenker über eine Feder und vorzugsweise eine Luftfeder gegenüber dem Fahrzeugrahmen ab. In der ebenfalls in Fig. 1 bezeichneten Ebene B ist der dargestellte Längslenker mit der Fahrzeugachse des Fahrzeuges verbindbar.

Fig. 1 läßt erkennen, daß die Dicke D des dargestellten Bauteils den im Betrieb in dem Bauteil wirkenden Lastzuständen entsprechend angepaßt ist. Die größte Materialdicke D findet sich bei dem dargestellten Ausführungsbeispiel im Bereich der Ebene B, d.h. bei Einsatz als Längslenker an jenem Ort, an dem der Längslenker mit der Fahrzeugachse verbunden ist.

Die Stränge aus Verbundfasern 6 sind in Fig. 1 gestrichelt dargestellt, wobei aus Gründen der Übersicht nur sehr wenige Stränge 6 dargestellt sind. Bei der Ausführungsform nach Fig. 1 werden die einzelnen Fasern 6 bzw. Stränge durch Sticktechnik zusammengehalten, wodurch die Grundgestalt des Bauteils mit dem umschlossenen Gelenkauge 2, einer parabelförmigen Aufweitung 5 und der Abkröpfung 1 entsteht. Um eine beanspruchungsgerechte Verlegung der Verstärkungsfasern 6 zu erzielen, werden unidirektionale Fasern, welche das Gelenkauge umschlingen, mit radial verlaufenden Fasern 6' verstickt. Im Bereich der größten Schubbeanspruchung des Bauteils werden in Längsrichtung des Bauteils verlaufende Verstärkungsfasern 7 mit anderen Verstärkungsfasern 6 gestickt, die zu den längsverlaufenden Fasern unter einem Winkel von vorzugsweise 20° bis 50° stehen. Dies läßt Fig. 1 insbesondere in Bezug auf den Bereich der parabelförmigen Aufweitung 5 erkennen. Über die gesamte Länge des Bauteils erstrecken sich entlang dessen Außenkontur durchgehende Verstärkungsfasern 7 bzw. Stränge hiervon.

Das Zusammensetzen der einzelnen Platten 4a, 4b, 4c, 4d, 4e zu dem Bauteil kann auf zweierlei verschiedene Art erfolgen. Entweder werden die Platten durch flächiges Verkleben mit einem Epoxid- oder Polyurethankleber miteinander verbunden. Alternativ lassen sich die Platten auch durch thermisches Verschweißen miteinander verbinden, wobei diese Verschweißung vorzugsweise flächig erfolgt, d.h. über die gesamte Flachseite der jeweils miteinander zu verschweißenden Platten. In jedem Fall kann auf zusätzliche Verstärkungen z.B. aus Metall verzichtet werden. Vorzugsweise enthalten die jeweils äußeren Platten besonders verschleißfeste Verstärkungsfasern aus PTFE.

Um den mechanischen Beanspruchungen beim späteren Einsatz des Bauteils optimal gerecht zu werden, erstrecken sich die Trennungsebenen zwischen den geschichteten Platten 4a, 4b, 4c, 4d, 4e orthogonal zu der Achse 3 des an dem Bauteil angeformten Gelenkauges 2. Sofern das Bauteil Anwendung als Längslenker in einem Fahrzeug findet, erfolgt daher eine horizontale Schichtung der Platten mit vertikal verlaufenden Verbindungsebenen zwischen benachbarten Platten .

In Fig. 2 ist eine alternative Technik zu dem bereits beschriebenen Versticken der Verstärkungsfasern beschrieben. Hierbei werden aus verschiedenen Fasernhalbzeugen, wie z. B. Geweben oder miteinander vernähten Gelegen, die mit kraftschlußgerechten Faserorientierungen versehen sind, Einzelteile 9, 10, 11, 12, welche vorab beispielsweise mit Matrixmaterial getränkt wurden, ausgestanzt und diese dann in der richtigen Reihenfolge gestapelt. Fig. 2 zeigt beispielhaft unten eine Platte 8, welche die Geometrie des Bauteils widerspiegelt, beim Ausführungsbeispiel ist dies wiederum eine Platte des Längslenkers. Entlang der Außenränder sind die unidirektional verlaufenden, vorzugsweise durchgehenden Verstärkungsfasern 7 angeordnet. Diese dienen der Aufnahme der Biegemomentenbelastung. Darüber ist in Fig. 2, explosionsartig dargestellt, links ein in einem Rundwebverfahren hergestellter Kreisring 9 dargestellt, der der Verstärkung des Gelenkauges 2 dient. Daneben findet sich ein Bereich 10 mit einer Faserorientierung unter ± 45°, die den Querkraftschub des Längslenkers aufzunehmen hat. Dieselbe Faserorientierung findet sich im Endbereich 11 des Längslenkers, dort wo bei dem späteren Einsatz des Längslenkers der Luftfederbalg der Luftfederung befestigt wird. In dem Mittenbereich 12 des Längslenkers, wo für den späteren Einsatz die Fahrzeugachse befestigt wird, ist eine angepaßte Faserorientierung vorgesehen, die vornehmlich in senkrechter Richtung orientiert ist. Diese Faserorientierung ist gut dafür geeignet, die Vorspannkräfte durch die Verschraubung zwischen Längslenker und Fahrzeugachse aufzunehmen.

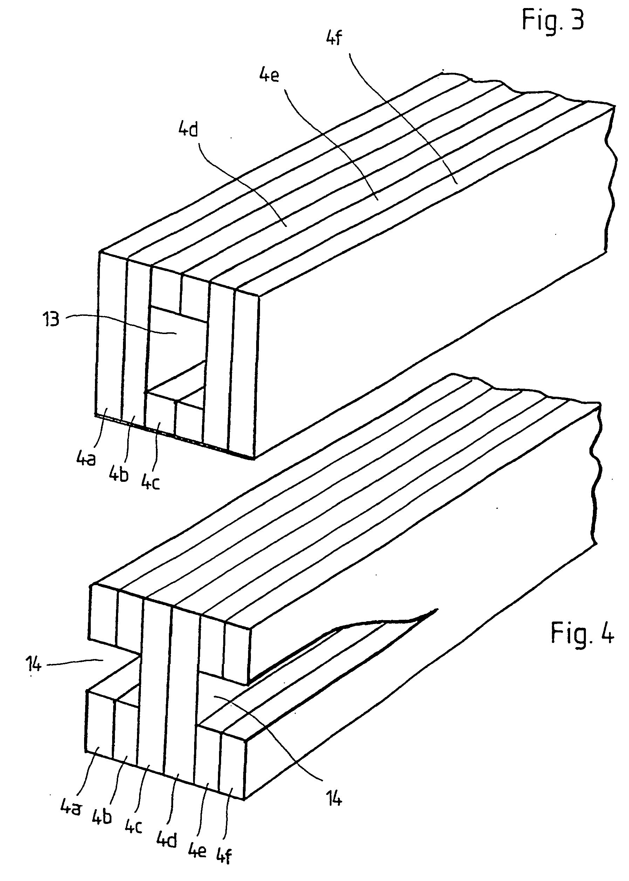

In Fig. 3 ist eine weitere Ausführungsform eines aus mehreren Platten 4a, 4b, 4c, 4d, 4e, 4f bestehenden Bauteils dargestellt. Von den insgesamt sechs Platten sind die beiden mittleren Platten 4c, 4d mit Ausnehmungen 13 versehen, weshalb das Bauteil teilweise hohl ist.

Bei der Ausführungsform gemäß Fig. 4 sind die jeweils äußeren Platten 4a, 4b, 4e, 4f mit Aussparungen 14 versehen, um das Bauteil so an spezifische Belastungszustände anzupassen.

### Bezugszeichenliste

- 1: Abkröpfung
- 2: Gelenkauge
- 3: Achse
- 4a: Platte
- 4b: Platte
- 4c: Platte
- 4d: Platte
- 4e: Platte
- 4f: Platte
- 5: parabelförmige Aufweitung
- 6: Verstärkungsfaser
- 6': radial verlaufende Faser
- 7: Verstärkungsfaser entlang der Außenkontur
- 8: Platte
- 9: Kreisring
- 10: Bereich
- 11: Endbereich
- 12: Mittenbereich
- 13: Ausnehmung
- 14: Aussparung

- A: Ebene
- B: Ebene
- D: Dicke des Bauteils

## Patentansprüche

1. Bauteil in langgestreckter Bauweise und mit einem daran angeformten Gelenkauge (2), wobei sich das Bauteil zusammensetzt aus geschichteten, im wesentlichen zueinander parallelen Platten (4a, 4b, 4c, 4d, 4e, 4f) aus einem Faser-Kunststoff-Verbund, **dadurch gekennzeichnet, daß** sich die Trennungsebenen zwischen den Platten (4a, 4b, 4c, 4d, 4e, 4f) orthogonal zu der Achse (3) des Gelenkauges erstrecken.

2. Bauteil nach Anspruch 1, **dadurch gekennzeichnet, daß** die Platten einen unterschiedlichen Laminataufbau aufweisen.

3. Bauteil nach Anspruch 1 oder 2, **dadurch gekennzeichnet, dass** jede der Platten (4a, 4b, 4c, 4d, 4e, 4f) schräg zur Haupterstreckung des Bauteils verlaufende Verstärkungsfasern (6) enthält.

4. Bauteil nach einem der vorangehenden Ansprüche, **dadurch gekennzeichnet, daß** der Laminataufbau der einzelnen Platten (4a, 4b, 4c, 4d, 4e, 4f) durch Sticken erzeugt wird.

5. Bauteil nach einem der vorangehenden Ansprüche, **dadurch gekennzeichnet, daß** sich die Orientierung der Verstärkungsfasern innerhalb der jeweiligen Platte (4a, 4b, 4c, 4d, 4e, 4f) quer und/oder längs zur Schichtdicke ändert.

6. Bauteil nach einem der vorangehenden Ansprüche, **dadurch gekennzeichnet, daß** die Mengenverteilung der Verstärkungsfasern innerhalb der jeweiligen Platte in Längsrichtung und/oder Querrichtung unterschiedlich ist.

7. Bauteil nach Anspruch 1, **dadurch gekennzeichnet, daß** einzelne Segmente der Platten aus ausgestanzten Gewebe- oder Gelegeabschnitten, vorzugsweise unidirektionalen Gewebe- oder Gelegeabschnitten (9, 10, 11, 12) erzeugt sind.

8. Bauteil nach Anspruch 7, **dadurch gekennzeichnet, daß** die Gewebe und/oder Gelegeabschnitte (9, 10, 11, 12) vorab mit Matrix getränkt sind.

9. Bauteil nach einem der vorhergehenden Ansprüche, **dadurch gekennzeichnet, daß** bei den einzelnen Platten die Matrix im Fall von Duroplasten schon ausgehärtet und im Fall einer thermoplastischen Matrix erstarrt ist.

10. Bauteil nach einem der Ansprüche 4 bis 9, **dadurch gekennzeichnet, daß** die Fasern an Kreuzungsorten miteinander verbunden sind.

11. Bauteil nach Anspruch 10, **dadurch gekennzeichnet, daß** sich Verstärkungsfasern unter Winkeln zwischen 20° und 50° kreuzen, vorzugsweise in durch Schubspannungen beanspruchten Bereichen.

12. Bauteil nach einem der vorangehenden Ansprüche **gekennzeichnet durch** eine erhöhte Faserdichte an Orten erhöhter Beanspruchung des Bauteils.

13. Bauteil nach einem der vorangehenden Ansprüche, **gekennzeichnet durch** zusätzliche, in Richtung der Haupterstreckung verlaufende Verstärkungsfasern (7) entlang der Außenkontur des Bauteils.

14. Bauteil nach einem der vorangehenden Ansprüche, **dadurch gekennzeichnet, daß** das Grundmaterial, in welches die Verstärkungsfasern eingelegt sind, ein Thermoplast ist.

15. Bauteil nach einem der vorangehenden Ansprüche, **dadurch gekennzeichnet, daß** die Verstärkungsfasern Glasfasern oder Kohlenstofffasern sind.

16. Bauteil nach einem der vorangehenden Ansprüche, **dadurch gekennzeichnet, daß** die Platten (4a, 4b, 4c, 4d, 4e, 4f) durch flächiges Verkleben mit einem Epoxid- oder Polyurethan kleber miteinander verbunden sind.

17. Bauteil nach einem der Ansprüche 1 bis 15, **dadurch gekennzeichnet, daß** die Platten (4a, 4b, 4c, 4d, 4e, 4f) durch Verschweißen miteinander verbunden sind.

18. Bauteil nach einem der vorangehenden Ansprüche, **dadurch gekennzeichnet, daß** die einzelnen Platten (4a, 4b, 4c, 4d, 4e, 4f) unterschiedliche Typen von Verstärkungsfasern (6, 6', 7) enthalten.

19. Bauteil nach einem der vorangehenden Ansprüche, **dadurch gekennzeichnet, daß** die Verstärkungsfasern in unterschiedlichen Platten (4a, 4b, 4c, 4d, 4e, 4f) unterschiedlich orientiert sind.

20. Bauteil nach einem der vorangehenden Ansprüche, **dadurch gekennzeichnet, daß** die Verstärkungsfasern in unterschiedlichen Platten (4a, 4b, 4c, 4d, 4e, 4f) einen unterschiedlichen Faseraufbau hinsichtlich ihrer Schichtungsreihenfolge aufweisen.

21. Bauteil nach einem der vorangehenden Ansprüche, **dadurch gekennzeichnet, daß** Verstärkungsfasern das Getenkauge (2) um mindestens 180° umschlingen.

22. Bauteil nach einem der vorangehenden Ansprüche, **dadurch gekennzeichnet, daß** einige der Platten gegenüber anderen der Platten Ausnehmungen (13) oder Aussparungen (14) aufweisen.

23. Bauteil nach Anspruch 21, **dadurch gekennzeichnet, daß** sich die Platten (4c, 4d) mit Ausnehmungen (13) im Mittenbereich des Bauteils befinden.

24. Bauteil nach einem der vorangehenden Ansprüche, **dadurch gekennzeichnet, daß** die äußeren (4a, 4e, 4a, 4f) der Platten Fasern enthalten, die verschleißfester sind als die Fasern in den übrigen Platten (4b, 4c, 4d; 4b, 4c, 4d, 4e), wobei die verschleißfesteren Fasern vorzugsweise PTFE-Fasern sind.

## Claims

1. Component of elongate design and with an articulation eye (2) integrally formed thereon, wherein the component is composed of layered sheets (4a, 4b, 4c, 4d, 4e, 4f) of a fibre-reinforced plastic, said sheets being essentially parallel to one another, **characterized in that** the separation planes between the sheets (4a, 4b, 4c, 4d, 4e, 4f) extend orthogonally with respect to the axis (3) of the articulation eye.

2. Component according to Claim 1, **characterized in that** the sheets have a different laminate structure.

3. Component according to Claim 1 or 2, **characterized in that** each of the sheets (4a, 4b, 4c, 4d, 4e, 4f) contains reinforcing fibres (6) running obliquely to the main direction of extension of the component.

4. Component according to any of the preceding claims, **characterized in that** the laminate structure of the individual sheets (4a, 4b, 4c, 4d, 4e, 4f) is produced by stitching.

5. Component according to any of the preceding claims, **characterized in that** the orientation of the reinforcing fibres within the respective sheet (4a, 4b, 4c, 4d, 4e, 4f) changes in the transverse direction and/or in the longitudinal direction with respect to the layer thickness.

6. Component according to any of the preceding claims, **characterized in that** the quantitative distribution of the reinforcing fibres within the respective sheet is different in the longitudinal direction and/or transverse direction.

7. Component according to Claim 1, **characterized in that** individual segments of the sheets are produced from punched-out tissue or fabric sections, preferably unidirectional tissue or fabric sections (9, 10, 11, 12).

8. Component according to Claim 7, **characterized in that** the tissue and/or fabric sections (9, 10, 11, 12) are previously impregnated with matrix.

9. Component according to any of the preceding claims, **characterized in that**, in the individual sheets, the matrix is already cured in the case of thermosets and is solidified in the case of a thermoplastic matrix.

10. Component according to any of Claims 4 to 9, **characterized in that** the fibres are bonded to one another at points of intersection.

11. Component according to Claim 10, **characterized in that** reinforcing fibres intersect at angles of between 20° and 50°, preferably in regions subjected to shear stress.

12. Component according to any of the preceding claims, **characterized by** an increased fibre density at points of increased stress of the component.

13. Component according to any of the preceding claims, **characterized by** additional reinforcing fibres (7) along the outer contour of the component, said fibres running in the main direction of extension.

14. Component according to any of the preceding claims, **characterized in that** the base material in which the reinforcing fibres are placed is a thermoplast.

15. Component according to any of the preceding claims, **characterized in that** the reinforcing fibres are glass fibres or carbon fibres.

16. Component according to any of the preceding claims, **characterized in that** the sheets (4a, 4b, 4c, 4d, 4e, 4f) are joined to one another by adhesive bonding over their entire surface by means of an epoxy or polyurethane adhesive.

17. Component according to any of Claims 1 to 15, **characterized in that** the sheets (4a, 4b, 4c, 4d, 4e, 4f) are joined to one another by fusion.

18. Component according to any of the preceding claims, **characterized in that** the individual sheets (4a, 4b, 4c, 4d, 4e, 4f) contain different types of reinforcing fibres (6, 6', 7).

19. Component according to any of the preceding claims, **characterized in that** the reinforcing fibres are oriented differently in different sheets (4a, 4b, 4c, 4d, 4e, 4f).

20. Component according to any of the preceding claims, **characterized in that** the reinforcing fibres have a different fibre structure in terms of their layer sequence in different sheets (4a, 4b, 4c, 4d, 4e, 4f).

21. Component according to any of the preceding claims, **characterized in that** reinforcing fibres wrap around the articulation eye (2) by at least 180°.

22. Component according to any of the preceding claims, **characterized in that** some of the sheets have recesses (13) or cutouts (14) compared to other sheets.

23. Component according to Claim 21, **characterized in that** the sheets (4c, 4d) with recesses (13) are located in the central region of the component.

24. Component according to any of the preceding claims, **characterized in that** the outer sheets (4a, 4e, 4a, 4f) contain fibres which are more wear-resistant than the fibres in the other sheets (4b, 4c, 4d; 4b, 4c, 4d, 4e), wherein the more wear-resistant fibres are preferably PTFE fibres.

## Revendications

1. Composant de construction d'allure allongée et avec un oeillet d'articulation (2) formé sur lui, le composant se composant de plaques (4a, 4b, 4c, 4d, 4e, 4f) empilées et sensiblement parallèles en un composite fibres-matière plastique, **caractérisé en ce que** les plans de séparation entre les plaques (4a, 4b, 4c, 4d, 4e, 4f) s'étendent orthogonalement à l'axe (3) de l'oeillet d'articulation.

2. Composant selon la revendication 1, **caractérisé en ce que** les plaques présentent une structure stratifiée différente.

3. Composant selon la revendication 1 ou 2, **caractérisé en ce que** chacune des plaques (4a, 4b, 4c, 4d, 4e, 4f) contient des fibres de renforcement (6) s'étendant à l'oblique par rapport à l'extension principale du composant.

4. Composant selon l'une des revendications précédentes, **caractérisé en ce que** la structure stratifiée des différentes plaques (4a, 4b, 4c, 4d, 4e, 4f) est produite par un procédé de broderie.

5. Composant selon l'une des revendications précédentes, **caractérisé en ce que** l'orientation des fibres de renforcement à l'intérieur de la plaque (4a, 4b, 4c, 4d, 4e, 4f) respective varie en direction transversale et/ou longitudinale par rapport à l'épaisseur de couche.

6. Composant selon l'une des revendications précédentes, **caractérisé en ce que** la répartition en masse des fibres de renforcement à l'intérieur de la plaque respective est variable dans la direction longitudinale et/ou la direction transversale.

7. Composant selon la revendication 1, **caractérisé en ce que** les différents segments des plaques sont produits à partir de sections estampées de tissu ou de voile, de préférence des sections unidirectionnelles de tissu ou de voile (9, 10, 11, 12).

8. Composant selon la revendication 7, **caractérisé en ce que** les sections de tissu ou de voile (9, 10, 11, 12) sont préalablement imprégnées avec une matrice.

9. Composant selon l'une des revendications précédentes, **caractérisé en ce que**, pour les différentes plaques, la matrice est déjà durcie dans le cas de thermodurcissables, et est prise dans le cas d'une matrice thermoplastique.

10. Composant selon l'une des revendications 4 à 9, **caractérisé en ce que** les fibres sont reliées entre elles en des points de croisement.

11. Composant selon la revendication 10, **caractérisé en ce que** des fibres de renforcement se croisent suivant des angles compris entre 20° et 50°, de préférence dans les zones exposées à des contraintes de cisaillement.

12. Composant selon l'une des revendications précédentes, **caractérisé par** une densité de fibres augmentée dans les zones de plus forte sollicitation du composant.

13. Composant selon l'une des revendications précédentes, **caractérisé par** des fibres de renforcement supplémentaires (7) s'étendant dans la direction de l'extension principale le long du contour extérieur du composant.

14. Composant selon l'une des revendications précédentes, **caractérisé en ce que** le matériau de base dans lequel sont enrobées les fibres de renforcement est un thermoplastique.

15. Composant selon l'une des revendications précédentes, **caractérisé en ce que** les fibres de renforcement sont des fibres de verre ou des fibres de carbone.

16. Composant selon l'une des revendications précédentes, **caractérisé en ce que** les plaques (4a, 4b, 4c, 4d, 4e, 4f) sont reliées entre elles par collage à plat avec un adhésif époxy ou polyuréthanne.

17. Composant selon l'une des revendications 1 à 15, **caractérisé en ce que** les plaques (4a, 4b, 4c, 4d, 4e, 4f) sont reliées entre elles par soudage.

18. Composant selon l'une des revendications précédentes, **caractérisé en ce que** les différentes plaques (4a, 4b, 4c, 4d, 4e, 4f) contiennent différents types de fibres de renforcement (6, 6', 7).

19. Composant selon l'une des revendications précédentes, **caractérisé en ce que** les fibres de renforcement dans les différentes plaques (4a, 4b, 4c, 4d, 4e, 4f) sont orientées différemment.

20. Composant selon l'une des revendications précédentes, **caractérisé en ce que** les fibres de renforcement dans les différentes plaques (4a, 4b, 4c, 4d, 4e, 4f) présentent une structure fibreuse différente en termes de séquence d'empilement des couches.

21. Composant selon l'une des revendications précédentes, **caractérisé en ce que** des fibres de renforcement entourent l'oeillet d'articulation (2) sur au moins 180°.

22. Composant selon l'une des revendications précédentes, **caractérisé en ce que** certaines des plaques présentent, par rapport à d'autres plaques, des évidements (13) ou des creusements (14).

23. Composant selon la revendication 21, **caractérisé en ce que** les plaques (4c, 4d) présentant des évidements (13) se trouvent dans la partie centrale du composant.

24. Composant selon l'une des revendications précédentes, **caractérisé en ce que** les plaques extérieures (4a, 4e, 4a, 4f) contiennent des fibres qui sont plus résistantes à l'usure que les fibres des autres plaques (4b, 4c, 4d ; 4b, 4c, 4d, 4e), les fibres plus résistantes à l'usure étant de préférence des fibres de PTFE.
